(19) Europäisches Patentamt
European Patent Office
Office européen des brevets

(11) EP 4 773 288 A1

(12) EUROPEAN PATENT APPLICATION
published in accordance with Art. 153(4) EPC

(43) Date of publication:
**08.07.2026 Bulletin 2026/28**

(21) Application number: **25797818.9**

(22) Date of filing: **18.04.2025**

(51) International Patent Classification (IPC):
***H01M 10/0562*** *(2010.01)* ***H01M 10/052*** *(2010.01)*
***H01M 4/38*** *(2006.01)*

(52) Cooperative Patent Classification (CPC):
**H01M 4/38; H01M 10/052; H01M 10/0562;**
Y02E 60/10

(86) International application number:
**PCT/KR2025/005285**

(87) International publication number:
**WO 2025/230193 (06.11.2025 Gazette 2025/45)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.04.2024 KR 20240057400**

(71) Applicant: **LG Energy Solution, Ltd.**
**Seoul 07335 (KR)**

(72) Inventors:
- **SHIM, Sunggeun**
  **Daejeon 34122 (KR)**
- **KIM, Youngbok**
  **Daejeon 34122 (KR)**
- **KIM, Ji Young**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

# (54) SULFIDE-BASED SOLID ELECTROLYTE AND ALL-SOLID-STATE BATTERY COMPRISING SAME

(57) The present disclosure relates to a sulfide-based solid electrolyte and an all-solid-state battery including same, and more particularly, to a sulfide-based solid electrolyte comprising three metals, including germanium (Ge), silicon (Si), and antimony (Sb), thereby to improve the ionic conductivity.

EP 4 773 288 A1

## Description

[Technical Field]

Cross-citation with Related Applications

This application claims the benefit of priority to Korean Patent Application No. 10-2024-0057400, filed April 30, 2024.

Technical Field

The present disclosure relates to a sulfide-based solid electrolyte and an all-solid-state battery comprising same.

[Related Art]

A variety of batteries are being researched to overcome the limitations of the current lithium secondary batteries in terms of capacity, safety, output, large-scale applications, and microminiaturization.

Representative examples include metal-air batteries, which have a very high theoretical capacity compared to lithium secondary batteries; all-solid-state batteries, which have no risk of explosion and are safe; supercapacitors in terms of output; NaS batteries or redox flow batteries (RFB) for large-scale applications; and thin film batteries for microminiaturization. Continuous research is being conducted in academia and industry on these technologies.

An all-solid-state battery is a battery in which the liquid electrolyte used in a conventional lithium secondary battery is replaced with a solid electrolyte, and since no flammable solvent is used in the battery, there is no possibility of ignition or explosion due to the decomposition reaction of the conventional electrolyte, which greatly improves safety. It also has the advantage of being able to use lithium metal or lithium alloys as negative electrode materials, which can dramatically improve the energy density relative to the mass and volume of the battery.

However, in an all-solid-state battery, the solid electrolyte is applied in a small particle size, which can lead to more interfaces and increased resistance, which in turn can degrade the performance, lifetime, and stability of the all-solid-state battery, resulting in poor battery performance.

The degradation of battery performance due to this increase in interfacial resistance can be offset by increasing the ionic conductivity of the solid electrolyte.

Therefore, it is necessary to develop a solid electrolyte with high ionic conductivity as a solid electrolyte for an all-solid-state battery.

[Prior Art Reference]

(Patent reference 1) Korean Laid-open Patent Publication No. 2021-0101061

[Detailed Description of the Invention]

[Technical Problem]

The inventors of the present disclosure have conducted various studies to solve the above problem and have found that when three metals including Ge, Si and Sb are comprised in in a sulfide-based solid electrolyte, the ionic conductivity of the sulfide-based solid electrolyte is improved.

Accordingly, it is an object of the present disclosure to provide a sulfide-based solid electrolyte with improved ionic conductivity.

It is another object of the present disclosure to provide an all-solid-state battery comprising a sulfide-based solid electrolyte with improved ionic conductivity.

[Technical Solution]

To accomplish the above objectives, the present disclosure provides a sulfide-based solid electrolyte comprising germanium (Ge), silicon (Si), and antimony (Sb).

In one example of the present invention, the sulfide-based solid electrolyte is provided, wherein the sulfide-based solid electrolyte further comprises iodine (I).

In one example of the present invention, the sulfide-based solid electrolyte is represented by Formula 1 below:

<Formula 1> $Li_{7-z}Ge_xSi_ySb_zS_5I$

wherein $0 < x \leq 0.3$, $0 < y \leq 0.4$, $0 < z \leq 0.4$, $x + y + z = 1$, and $x : y : z = 1 : 1.1$ to $2 : 1.1$ to $2$.

In one example of the present invention, the sulfide-based solid electrolyte is provided, wherein the sulfide-based solid electrolyte is phosphorous-free.

In one example of the present invention, there is provided the sulfide-based solid electrolyte with an ionic conductivity of 4.3 to 6 mS/cm.

In one example of the present invention, the sulfide-based solid electrolyte is provided, wherein the sulfide-based solid electrolyte is in a form of a sulfide-based solid electrolyte film.

The present disclosure also provides an all-solid-state battery comprising a positive electrode, a negative electrode, and the sulfide-based solid electrolyte interposed therebetween.

In one example of the present invention, there is provided an all-solid-state battery, wherein the negative electrode is a lithium negative electrode comprising a lithium metal.

[Advantageous Effects]

According to the present invention, the ionic conductivity of a sulfide-based solid electrolyte may be improved by including three metals, including germanium (Ge), silicon (Si), and antimony (Sb), in the sulfide-based solid electrolyte.

[Best Mode]

Hereinafter, the present disclosure will be described in more detail to provide a better understanding.

The terms and words used in this specification and claims are not to be construed in their ordinary or dictionary sense, but rather in a sense and concept consistent with the technical idea of the present invention, based on the principle that the inventor may define the concept of a term as he/her sees fit to best describe his/her invention.

**Sulfide-based solid electrolyte**

The present disclosure relates to a sulfide-based solid electrolyte.

The sulfide-based solid electrolyte according to the present disclosure includes germanium (Ge), silicon (Si) and antimony (Sb). Due to the three metals including Ge, Si and Sb, the disorder in the structure is increased, allowing lithium ions to move smoothly, which may improve the ionic conductivity of the sulfide-based solid electrolyte.

Specifically, the sulfide-based solid electrolyte may be a sulfide-based solid electrolyte having a structure of $Li_6SbS_5I$, and doped with Ge and Si. The "doping" may refer to "substituting." It may mean substituting a portion of Sb with Ge and Si, by removing a portion of Sb from the sulfide-based crystal structure and adding Ge and Si.

Generally, the crystal structure of the sulfide-based solid electrolyte is a face-centered cubic lattice (FCC) structure, which means that lithium ions are trapped in the sulfur atom octahedron during their movement. However, replacing a part of the substance with a heterogeneous substance may change the strength of the electrostatic attraction, altering the arrangement of atoms within the structure, which in turn lowers the activation energy and provides a new pathway for lithium ion migration, thus improving ionic conductivity. Accordingly, the present disclosure introduces three metals as heterogeneous substances into the crystal structure of a conventional sulfide-based solid electrolyte, so that the ionic conductivity may be further improved.

For example, introducing three metals as heterogeneous materials into the crystal structure of a conventional sulfide-based solid electrolyte may increase disorder, and facilitate Li migration, thereby to improve ionic conductivity. Some portion of the Sb, which has a +5 oxidation number, is replaced with the +4 metals Ge and Si, and $Li^+$ is added to compensate for the oxidation number to maintain the electrical neutrality of the molecule. $Li^+$ may be added, for example, in the form of $Li_2S$. In this case, the ionic conductivity is enhanced due to the sufficient Li content, and the movement of lithium ions may be facilitated by vacancies formed in the structure through partial substitution of elements having different oxidation numbers, thereby further enhancing the ionic conductivity.

If it does not contain any of the above three metals, the increase in structural disorder may be minimal, resulting in negligible ionic conductivity enhancement. Furthermore, Sb is a toxic material, and by replacing some portion of the Sb with two other metals, the ionic conductivity may be improved while minimizing the toxicity by reducing the Sb content.

In one example of the present invention, the sulfide-based solid electrolyte may further comprise iodine (I).

When I is included in addition to the above three metals, the structural disorder is further increased, which may improve the ionic conductivity of the sulfide-based solid electrolyte.

In one example of the present invention, the sulfide-based solid electrolyte may be represented by Formula 1 below:

<Formula 1> $Li_{7-z}Ge_xSi_ySb_zS_5I$

wherein $0 < x \leq 0.3$, $0 < y \leq 0.4$, $0 < z \leq 0.4$, $x + y + z = 1$ and x : y : z = 1 : 1.1 to 2 : 1.1 to 2.

Further, the x : y : z may be 1 : 1.2 to 1.8 : 1.2 to 1.8, or 1 : 1.3 to 1.7 : 1.3 to 1.7, or 1 : 1.4 to 1.6 : 1.4 to 1.6, and the effect of improving the ionic conductivity of the sulfide-based solid electrolyte may be the best when the x : y : z is 1 : 1.5 : 1.5.

In one example of the present invention, the sulfide-based solid electrolyte may be phosphorous-free.

The combination of phosphorus and sulfur is the same as the element of the early-stage match. In the case of early-stage match, ignition is facilitated, but there is a high risk of ignition during storage and transportation. By the same principle, phosphorus-free sulfide-based solid electrolytes that do not contain phosphorus may suppress the risk of ignition and explosion during the synthesis process. The synthesis process may refer to a precursor milling process performed in the manufacture of a sulfide-based solid electrolyte.

In one example of the present invention, the ionic conductivity of the sulfide-based solid electrolyte may be 4.3 to 6 mS/cm.

The sulfide-based solid electrolyte contains three metals, which may lead to structural disorder. This may facilitate the movement of lithium ions, and the ionic conductivity may be improved by increasing the ratio of solid solubility of the elements.

In one example of the present invention, the sulfide-based solid electrolyte may be in a form of a solid electrolyte film.

The sulfide-based solid electrolyte may also be in a form of particles. In this case, the sulfide-based solid electrolyte may also be applied to the positive electrode or negative electrode. For example, the sulfide-based solid electrolyte in the form of particles may be applied to electrode layers such as a positive electrode layer or a negative electrode layer.

**Method of preparing a sulfide-based solid electrolyte**

The present disclosure also relates to a method of preparing the sulfide-based solid electrolyte.

A method of preparing the sulfide-based solid electrolyte according to the present disclosure comprises: (S1) mixing raw materials; and (S2) heat treating the mixtures obtained in step (S1) to synthesize a sulfide-based solid electrolyte. This may also be referred to as a solid-phase synthesis.

Hereinafter, a method for preparing a sulfide-based solid electrolyte according to the present disclosure will be described in more detail by each step.

In one example of the present invention, in step (S1) above, the raw materials may be mixed.

The raw materials may also refer to the precursors of the respective elements contained in the sulfide-based solid electrolyte. The above raw materials are not particularly limited as long as they are substances commonly used in the art as precursors for each element. For example, the raw material for forming the sulfide-based solid electrolyte may be lithium sulfide ($Li_2S$), germanium sulfide ($GeS_2$), silicon (Si), antimony (Sb), and/or lithium iodide (LiI). For example, 2.5 to 5 mol of $Li_2S$, more than 0 mol and not more than 1 mol of $GeS_2$, more than 0 mol and not more than 1 mol of Si, more than 0 mol and not more than 1 mol of Sb, more than 0 mol and not more than 2 mol of S, and more than 0 mol and not more than 2 mol of LiI.

Furthermore, the mixing method is not particularly limited as long as it may be practiced in the art for mixing raw materials. For example, the mixing method may be milling, which may be hand milling, ball milling, or the like. The ball milling may be vibratory ball milling, and may be performed at 20 to 50 Hz for 1 to 30 minutes.

In one example of the present invention, in step (S2), the mixture obtained in step (S1) above may be heat treated to synthesis a solid phase.

The heat treatment may be performed under an inert atmosphere, at 300°C to 600°C and under conditions of 4 hours to 48 hours. Specifically, the heat treatment temperature may be 300°C or higher, 350°C or higher, or 400°C or higher, and may be 600°C or lower, 550°C or lower, or 500°C or lower. Further, the heat treatment time may be 4 hours or more, 6 hours or more, 8 hours or more, 10 hours or more, or 12 hours or more, and may be 48 hours or less, 45 hours or less, 40 hours or less, 35 hours or less, 30 hours or less, 25 hours or less, 20 hours or less, or 15 hours or less. The inert atmosphere may refer to a nitrogen, helium, argon, or carbon dioxide atmosphere. Further, the heat treatment may be performed while increasing the temperature, and the heating rate may be 1 to 10°C /min. Specifically, the heating rate may be 1°C /min or more, 2°C /min or more, 3°C /min or more, 4°C /min or more, or may be 10°C /min or less, 9°C /min or less, 8°C /min or less, 7°C /min or less, or 6°C /min or less.

Furthermore, the sulfide-based solid electrolyte according to the present disclosure may be obtained through the above steps (S1) and (S2), and the manufacturing process including the above steps (S1) and (S2) may be carried out in a glove box that is not exposed to moisture and oxygen.

**All-solid-state battery**

The present disclosure also relates to an all-solid-state battery comprising the sulfide-based solid electrolyte.

An all-solid-state battery according to the present disclosure includes a sulfide-based solid electrolyte film comprising the sulfide-based solid electrolyte; a positive electrode formed on one side of the sulfide-based solid electrolyte film; and a negative electrode formed on the other side of the sulfide-based solid electrolyte.

In one example of the present invention, the positive electrode may include a positive electrode active material, a conductive material, and a binder.

In the present invention, the positive electrode included in the all-solid-state battery includes a positive electrode active material layer, wherein the positive electrode active material layer may be formed on one side of the positive electrode current collector.

The positive electrode active material layer includes a positive electrode active material, a conductive material, and a binder.

Furthermore, the positive electrode active material may be any material capable of reversibly adsorbing and releasing lithium ions, without being particularly limited thereto, for example, a layered compound such as lithium cobalt oxide ($LiCoO_2$), lithium nickel oxide ($LiNiO_2$), $Li[Ni_xCo_yMn_zM_v]O_2$ (wherein M is any one or two or more elements selected from the group consisting of Al, Ga and In; and $0.3 \leq x < 1.0$, $0 \leq y$, $z \leq 0.5$, $0 \leq v \leq 0.1$, and x+y+z+v=1), $Li(Li_aM_{b-a-b'}M'_{b'})O_{2-c}A_c$ (wherein $0 \leq a \leq 0.2$, $0.6 \leq b \leq 1$, $0 \leq b' \leq 0.2$, and $0 \leq c \leq 0.2$; M comprises at least one selected from the group consisting of Mn, Ni, Co, Fe, Cr, V, Cu, Zn, and Ti; M' comprises at least one selected from the group consisting of Al, Mg and B; and A comprises at least one selected from the group consisting of P, F, S and N), or a compound substituted with one or more transition metals; a lithium manganese oxide such as a compound of formula $Li_{1+y}Mn_{2-y}O_4$ (wherein y is 0 to 0.33), $LiMnO_3$, $LiMn_2O_3$, or $LiMnO_2$; a lithium copper oxide ($Li_2CuO_2$); a vanadium oxide, such as $LiV_3O_8$, $LiFe_3O_4$, $V_2O_5$, or $Cu_2V_2O_7$ ; a Ni site-type lithium nickel oxide represented by formula $LiNi_{1-y}MyO_2$ (wherein M is Co, Mn, Al, Cu, Fe, Mg, B or Ga, and y is 0.01 to 0.3; a lithium manganese complex oxide represented by formula LiMn2-yMyO2 (wherein M is Co, Ni, Fe, Cr, Zn, or Ta, and y is 0.01 to 0.1) or $Li_2Mn_3MO_8$ (wherein M is Fe, Co, Ni, Cu, or Zn); $LiMn_2O_4$, in which a portion of the Li in the formula is substituted by an alkaline earth metal ion; a disulfide compound; $Fe_2(MoO_4)_3$; and the like, but not limited thereto.

Further, the positive electrode active material may be included in an amount of 60 to 80% by weight based on the total weight of the positive electrode active material layer. Specifically, the content of the positive electrode active material may be 60% by weight, 65% by weight or more, or 68% by weight or more, or may be 72% by weight or less, 75% by weight or less, or 80% by weight or less. If the content of the positive electrode active material is less than 60% by weight, the battery performance may be reduced, and if the content is greater than 80% by weight, the mass transfer resistance may be increased.

Furthermore, the conductive material is not particularly limited as long as it prevents side reactions in the internal environment of an all-solid-state battery and has excellent electrical conductivity without causing chemical changes in the battery, and graphite or conductive carbon can be used as a representative, for example, graphite such as natural graphite, artificial graphite, and the like; carbon black such as carbon black, acetylene black, ketjen black, denka black, thermal black, channel black, furnace black, lamp black, summer black, and the like; carbon-based materials having a crystal structure of graphene or graphite; conductive fibers such as carbon fibers, metal fibers, etc.; carbon fluorides; metal powders, such as aluminum powder, nickel powder, etc.; conductive whiskeys, such as zinc oxide, potassium titanate, etc.; conductive oxides, such as titanium oxide; and conductive polymers, such as polyphenylene derivatives; can be used alone or in a mixture of two or more of the foregoing, but not necessarily limited thereto. Preferably, the conductive material may comprise vapor-grown carbon fiber (VGCF).

Further, the conductive material may be comprised in an amount of 1% by weight to 5% by weight based on the total weight of the positive electrode active material layer, and more specifically, the content of the conductive material may be 1% by weight or more, 1.5% by weight or more, 2% by weight or more, and may be 4% by weight or less, 4.5% by weight or less, or 5% by weight or less. If the content of the conductive material is too small, such as less than 1% by weight, it is difficult to expect the effect of improving the electrical conductivity or the electrochemical properties of the battery may be degraded, and if it is too large, such as more than 5% by weight, the amount of positive electrode active material may be relatively small, resulting in a decrease in capacity and energy density. The method of incorporating the conductive material into the positive electrode is not substantially limited, and any conventional method known in the art can be used, such as mixing with or coating the positive electrode active material.

The binder is a component that assists in the bonding of the positive electrode active material and the conductive material or the bonding to a current collector, and may comprise at least one selected from the group consisting of styrene-butadiene rubber, acrylated styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polypichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethylcellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise polytetrafluoroethylene (PTFE).

Further, the binder may be comprised in an amount of 0.5% by weight to 4% by weight based on the total weight of the positive electrode active material layer, and more specifically, the content of the binder may be 0.5% by weight or more, 1% by weight or more, 1.5% by weight or more, 3% by weight or less, 3.5% by weight or less, or 4% by weight or less. If the binder content is less than 0.5% by weight, the adhesion of the positive electrode active material to the positive electrode current collector may be reduced, and if the binder content is greater than 4% by weight, the adhesion may be improved, but the content of the positive electrode active material may be reduced, resulting in a lower cell capacity.

Further, the positive electrode current collector supports the positive electrode active material layer and serves to transfer electrons between the outer wire and the positive electrode active material layer.

The positive electrode current collector is not particularly limited as long as it has a high electronic conductivity without causing chemical changes in an all-solid-state battery. For example, copper, stainless steel, aluminum, nickel, titanium, palladium, calcined carbon, copper or stainless steel whose surface is treated with carbon, nickel, or silver, aluminum-cadmium alloy, and the like may be used as the positive electrode current collector.

The positive electrode current collector may have a microscopic uneven structure or adopt a three-dimensional porous structure on the surface of the positive electrode current collector to strengthen the binding force with the positive electrode active material layer. Accordingly, the positive electrode current collector may comprise various forms such as film, sheet, foil, mesh, net, porous material, foam, nonwoven material, and the like.

The positive electrode as described above can be manufactured according to conventional methods, and more specifically, by applying a composition for forming a positive electrode active material layer prepared by mixing a positive electrode active material with a conductive material and a binder in an organic solvent on the positive electrode current collector and drying same, and optionally, compression molding same on the current collector to improve the electrode density. In this case, it is preferable to use an organic solvent that can uniformly disperse a positive electrode active material, a binder and a conductive material, and is easily evaporated. Specifically, the examples include acetonitrile, methanol, ethanol, tetrahydrofuran, water, and isopropyl alcohol.

In the present invention, the negative electrode comprised in the all-solid-state battery comprises a negative electrode active material layer, wherein the negative electrode active material layer may be formed on one side of the negative electrode current collector.

The negative electrode active material may comprise a material capable of reversibly intercalating or deintercalating lithium ($Li^+$), a material capable of reacting with lithium ions to reversibly form a lithium-containing compound, a lithium metal, or a lithium alloy.

The material into which the lithium ions ($Li^+$) can be reversibly inserted or removed can be, for example, crystalline carbon, amorphous carbon, or a mixture thereof. The material capable of reacting with the lithium ions ($Li^+$) to reversibly form a lithium-containing compound may be, for example, tin oxide, titanium nitrate, or silicon. The lithium alloy may be, for example, an alloy of lithium (Li) and a metal selected from the group consisting of indium (In), sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be a lithium metal or a lithium-indium alloy (Li-In), more specifically, it may be in the form of a lithium metal or a lithium thin film or a lithium-indium alloy thin film or powder.

The negative electrode active material may be comprised in an amount of 40 to 80% by weight based on the total weight of the negative electrode active material layer. Specifically, the content of the negative electrode active material may be 40% by weight or more, 50% by weight or more, or may be 70% by weight or less, or 80% by weight or less. If the content of the negative electrode active material is less than 40% by weight, the connectivity between the wet negative electrode active material layer and the dry negative electrode active material layer may be insufficient, and if the content is greater than 80% by weight, the mass transfer resistance may be greater.

Further, the binder is as described above for the positive electrode active material layer.

Further, the conductive material is as described above for the positive electrode active material layer.

Furthermore, the negative electrode current collector is not particularly limited as long as it is conductive without causing chemical changes in the battery, for example, copper, stainless steel, aluminum, nickel, titanium, calcined carbon, copper or stainless steel whose surface is treated with carbon, nickel, or silver, aluminum-cadmium alloy, and the like can be used. Also, like the positive electrode current collector, the negative electrode current collector can be in various forms, such as a film, sheet, foil, net, porous material, foam, nonwoven material, etc. with fine irregularities formed on the surface.

The method of manufacturing a negative electrode is not particularly limited, and can be manufactured by forming a negative electrode active material layer on the negative electrode current collector using a conventional method of forming a layer or a film. For example, methods such as pressing, coating, or deposition can be utilized. The negative electrode of the present disclosure also includes a case in which a metallic lithium thin film is formed on a metal plate by initial charging after the battery is assembled without a lithium thin film on the negative electrode current collector.

**Battery module**

The present disclosure also relates to a battery module comprising the all-solid-state battery as a unit cell, a battery pack comprising the battery module, and a device comprising the battery pack as a power source.
Specific examples of such devices include, but are not limited to, a power tool powered by an electric motor; an electric vehicle, including an electric vehicle (EV), a hybrid electric vehicle (HEV), a plug-in hybrid electric vehicle (PHEV), and the like; an electric two-wheeled vehicle, including an electric bicycle (E-bike) and an electric scooter (E-scooter); an electric golf cart; a power storage system; and the like.

[Mode for Practicing the Invention]

Hereinafter, preferred examples of the present disclosure are described for the purpose of illustrating the present invention, but it will be apparent to those skilled in the art that various changes and modifications are possible within the scope of the present disclosure and the technical idea, and that such changes and modifications fall within the scope of the appended patent claims.

**Example 1: Manufacturing of a sulfide-based solid electrolyte containing Ge, Si, and Sb (three metals)**

The raw materials were mixed by vibratory ball milling (40 Hz, 5 min) in a glove box, and then heat treatment was carried out at a heating rate of 5 °C/min under an Ar atmosphere at 450 °C for 12 hours to synthesis a solid phase, to prepare a sulfide-based solid electrolyte ($Li_{6.625}Ge_{0.25}Si_{0.375}Sb_{0.375}S_5I$) containing Ge, Si, and Sb. The following materials were used as raw materials: 2.8125 mol of $Li_2S$ (Sigma Aldrich), 0.25 mol of $GeS_2$ (Kojundo), 0.375 mol of Si (Sigma Aldrich), 0.375 mol of Sb (Sigma Aldrich), 1.6875 mol of S (Sigma Aldrich), and 1 mol of LiI (Alfa aesar).

**Comparative Example 1: Manufacturing of a sulfide-based solid-state electrolyte containing Ge and Si (two metals)**

Except that Sb is not included, a sulfide-based solid electrolyte comprising Ge and Si ($Li_7Ge_{0.4}Si_{0.6}S_5I$) was prepared in the same manner as in Example 1. The following materials were used as raw materials: 3 mol of $Li_2S$ (Sigma Aldrich), 0.4 mol of $GeS_2$ (Kojundo), 0.6 mol of Si (Sigma Aldrich), 1.2 mol of S (Sigma Aldrich), and 1 mol of LiI (Alfa aesar).

**Comparative Example 2: Manufacturing of a sulfide-based solid-state electrolyte containing Ge and Sb (two metals)**

Except that Si is not included, a sulfide-based solid electrolyte containing Ge and Si ($Li_{6.4}Ge_{0.4}Sb_{0.6}S_5I$) was prepared in the same manner as in Example 1. The following materials were used as raw materials: 2.7 mol of $Li_2S$ (Sigma Aldrich), 0.4 mol of $GeS_2$ (Kojundo), 0.6 mol of Sb (Sigma Aldrich), 1.5 mol of S (Sigma Aldrich), and 1 mol of LiI (Alfa aesar).

**Comparative Example 3: Manufacturing of a sulfide-based solid-state electrolyte containing Si and Sb (two metals)**

Except that Ge is not included, a sulfide-based solid electrolyte comprising Si and Si ($Li_{6.5}Si_{0.5}Sb_{0.5}S_5I$) was prepared in the same manner as in Example 1. The following materials were used as raw materials: 2.75 mol of $Li_2S$ (Sigma Aldrich), 0.5 mol of Si (Sigma Aldrich), 0.5 mol of Sb (Sigma Aldrich), 2.25 mol of S (Sigma Aldrich), and 1 mol of LiI (Alfa aesar).

**Comparative Example 4: Manufacturing of a sulfide-based solid-state electrolyte containing Sb (one metal)**

A sulfide-based solid electrolyte that does not contain Ge and Si, but contain Sb ($Li_6SbS_5I$) was synthesized.
The following materials were used as raw materials: 2.5 mol of $Li_2S$ (Sigma Aldrich), 1 mol of Sb (Sigma Aldrich), 2.5 mol of S (Sigma Aldrich), and 1 mol of LiI (Alfa aesar).

**Experimental Example 1: Measurement of ionic conductivity**

To measure the ionic conductivity of the sulfide-based solid electrolytes prepared in the Example and Comparative Examples, an electrochemical impedance spectroscopy (EIS) analysis was performed.

For the EIS analysis, an electrode cell was fabricated. The electrode cell was prepared using a 13 mm diameter electrode, by adding 200 mg of the sulfide-based solid electrolyte to the electrode and pressurizing it to a pressure of 360 MPa.

Using an electrochemical impedance spectrometer (EIS, VMP300Bio Logic), the ionic conductivity of the sulfide-based solid electrolyte was calculated by measuring the resistance at 25°C, AC 0.1 V and a frequency of 1 Hz to 0.1 MHz using Formula 1 below.

[Formula 1]

$$\sigma_i = \frac{L}{RA}$$

In Formula 1, $\sigma_i$ is the ionic conductivity of the sulfide-based solid electrolyte (mS/cm), R is the resistance of the sulfide-based solid electrolyte (Ω) measured by the above electrochemical impedance spectrometer, L is the thickness of the sulfide-based solid electrolyte (μm), and A is the area of the sulfide-based solid electrolyte ($cm^2$).

Table 1 below shows the composition and measured ionic conductivity of the sulfide-based solid electrolytes prepared in the Example and Comparative Examples.

[Table 1]

| | Li | Ge | Si | Sb | S | I | Ionic conductivity (mS/cm) |
|---|---|---|---|---|---|---|---|
| Example 1 | 6.625 | 0.25 | 0.375 | 0.375 | 5 | 1 | 4.48 |
| Comparative Example 1 | 7 | 0.4 | 0.6 | 0 | 5 | 1 | 0.0007 |
| Comparative Example 2 | 6.4 | 0.4 | 0 | 0.6 | 5 | 1 | 1.21 |
| Comparative Example 3 | 6.5 | 0 | 0.5 | 0.5 | 5 | 1 | 4.17 |
| Comparative Example 4 | 6 | 0 | 0 | 1 | 5 | 1 | 0.0004 |

Referring to Table 1 above, it was confirmed that Example 1, which includes three metals including Ge, Si, and Sb, exhibits the highest ionic conductivity. It was also found that the absence of any of the three metals significantly reduced the ionic conductivity.

Although the present disclosure has been described above by way of limited examples and drawings, the invention is not limited thereby, and various modifications and variations may be made by those having ordinary skill in the art, within the technical idea of the invention and the equivalent scope of the patent claims set forth below.

## Claims

1. A sulfide-based solid electrolyte comprising germanium (Ge), silicon (Si), and antimony (Sb).

2. The sulfide-based solid electrolyte according to claim 1, wherein the sulfide-based solid electrolyte further comprises iodine (I).

3. The sulfide-based solid electrolyte according to claim 1,

   wherein the sulfide-based solid electrolyte is represented by Formula 1 below:

   <Formula 1> $Li_{7-z}Ge_xSi_ySb_zS_5I$

   wherein $0 < x \leq 0.3$, $0 < y \leq 0.4$, $0 < z \leq 0.4$, $x + y + z = 1$ and $x : y : z = 1 : 1.1$ to $2 : 1.1$ to $2$.

4. The sulfide-based solid electrolyte according to claim 1,

wherein the sulfide-based solid electrolyte is phosphorous-free.

**5.** The sulfide-based solid electrolyte according to claim 1,
wherein the sulfide-based solid electrolyte has an ionic conductivity of 4.3 to 6 mS/cm.

**6.** The sulfide-based solid electrolyte according to claim 1,
wherein the sulfide-based solid electrolyte is in a form of a sulfide-based solid electrolyte film.

**7.** An all-solid-state battery comprising a positive electrode, a negative electrode, and the sulfide-based solid electrolyte according to claim 1 interposed therebetween.

**8.** The all-solid-state battery according to claim 7,
wherein the negative electrode is a lithium negative electrode comprising a lithium metal.

## INTERNATIONAL SEARCH REPORT

International application No. **PCT/KR2025/005285**

**A. CLASSIFICATION OF SUBJECT MATTER**

**H01M 10/0562**(2010.01)i; **H01M 10/052**(2010.01)i; **H01M 4/38**(2006.01)i

According to International Patent Classification (IPC) or to both national classification and IPC

**B. FIELDS SEARCHED**

Minimum documentation searched (classification system followed by classification symbols)

H01M 10/0562(2010.01); H01B 1/06(2006.01); H01M 10/0525(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고체전해질(solid electrolyte), 게르마늄(germanium), 실리콘(silicon), 안티모니(antimony), 황화물계(sulfide)

**C. DOCUMENTS CONSIDERED TO BE RELEVANT**

| Category* | Citation of document, with indication, where appropriate, of the relevant passages | Relevant to claim No. |
|---|---|---|
| | LIN, J. et al. A High Entropy Multicationic Substituted Lithium Argyrodite Superionic Solid Electrolyte. ACS Materials Letters. 2022, vol. 4, issue 11, pp. 2187-2194 (inner pp. 1-18). | |
| X | See abstract; and page 7. | 1,2,5-8 |
| A | | 3,4 |
| | US 2023-0291001 A1 (THE UNIVERSITY OF LIVERPOOL) 14 September 2023 (2023-09-14) | |
| X | See paragraphs [0001], [0019], [0043]-[0048], [0094]-[0099] and [0103]. | 1-8 |
| | WO 2022-186303 A1 (MITSUI MINING & SMELTING CO., LTD.) 09 September 2022 (2022-09-09) | |
| X | See abstract; paragraphs [0011], [0036], [0037], [0041] and [0054]; and claims 1 and 9-11. | 1-8 |
| | ZHOU, L. et al. New Family of Argyrodite Thioantimonate Lithium Superionic Conductors. Journal of the American Chemical Society. 2019, vol. 144, pp. 19002-19013. | |
| A | See abstract. | 1-8 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **14 July 2025** | **16 July 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2025/005285**

**C. DOCUMENTS CONSIDERED TO BE RELEVANT**

| Category* | Citation of document, with indication, where appropriate, of the relevant passages | Relevant to claim No. |
|---|---|---|
| PX | MA, Y. et al. A Superionic Conductor Lithium Argyrodite Sulfide of Li7-x(GeSi)(1-x)/2SbxS5I Towards All-Solid-State Lithium-Ion Batteries. ACS Energy Letters. 25 February 2025, vol. 10, issue 3, pp. 1374-1381. See abstract; tables S1 and S5; and figure S14. | 1-8 |

Form PCT/ISA/210 (second sheet) (July 2022)

**INTERNATIONAL SEARCH REPORT**
**Information on patent family members**

International application No.
**PCT/KR2025/005285**

| Patent document cited in search report | Publication date (day/month/year) | Patent family member(s) | Publication date (day/month/year) |
|---|---|---|---|
| US 2023-0291001 A1 | 14 September 2023 | EP 4136696 A1 | 22 February 2023 |
| | | WO 2021-234416 A1 | 25 November 2021 |
| WO 2022-186303 A1 | 09 September 2022 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020240057400
- KR 20210101061